# EUROPEAN PATENT APPLICATION

(11) **EP 2 755 166 A2**
(43) Date of publication of application: **16.07.2014**
(21) Application number: 13199765.2
(22) Date of filing: 30.12.2013
(51) Int. Cl.: G06K 9/62

(54) **Recognition program evaluation device and method for evaluating recognition program**

(30) Priority: 15.01.2013 JP 2013004888
(71) Applicant: Kabushiki Kaisha Yaskawa Denki, Kitakyushu-shi, Fukuoka 806-0004 (JP)
(72) Inventor: Ideguchi, Hisashi, Kitakyushu-shi, Fukuoka 806-0004 (JP); Kono, Toshiyuki, Kitakyushu-shi, Fukuoka 806-0004 (JP)
(74) Representative: Viering, Jentschura & Partner Patent- und Rechtsanwälte

(57) **Abstract**

A recognition program evaluation device (1) includes an imaginary data acquisition portion (111) to generate or acquire imaginary scene data that includes position data of each of a plurality of workpieces and indicates the workpieces in a randomly stacked state. An imaginary recognition portion (112a) recognizes each of the workpieces indicated in the randomly stacked state using a recognition program including at least one parameter set to adjust recognition of the workpieces. A recognition evaluation portion (112a) compares the position data of each of the workpieces with a result of recognition of each of the workpieces recognized by the imaginary recognition portion (112a) so as to evaluate recognition performance of the recognition program. A result display portion (112b) causes a display of a result of evaluation of the recognition performance of the recognition program evaluated by the recognition evaluation portion (112a).

## Description

### BACKGROUND

### FIELD OF THE INVENTION

The present invention relates to a recognition program evaluation device and to a method for evaluating a recognition program.

### DISCUSSION OF THE BACKGROUND

Japanese Unexamined Patent Application Publication No. 2011-22133 recites a recognition device that generates an algorithm (recognition program) of a plurality of scripts combined to recognize a workpiece. The recognition device uses this algorithm to recognize a plurality of randomly stacked workpieces. According to Japanese Unexamined Patent Application Publication No. 2011-22133, a user presumably makes a visual comparison between the workpieces actually stacked in a random manner and the result of recognition so as to evaluate the recognition performance of the algorithm.

The contents of Japanese Unexamined Patent Application Publication No. 2011-22133 are incorporated herein by reference in their entirety.

With the recognition device recited in Japanese Unexamined Patent Application Publication No. 2011-22133, the user presumably makes a visual comparison between the workpieces actually stacked in a random manner and the result of recognition so as to evaluate the recognition performance the algorithm. This can be a burden to the user in evaluating the algorithm to recognize the workpieces. In view of this, there is a need for a reduction of burden to the user in evaluating the algorithm to recognize the workpieces.

The present invention has been made in view of the above-described circumstances, and it is an object of the present invention to provide such a recognition program evaluation device and a method for evaluating a recognition program that are capable of reducing burden to the user in evaluating a recognition program to recognize workpieces.

### SUMMARY

According to one aspect of the present invention, a recognition program evaluation device 1 includes an imaginary data acquisition portion 111, an imaginary recognition portion 112a, a recognition evaluation portion 112a, and a result display portion 112b. The imaginary data acquisition portion 111 is configured to generate or acquire imaginary scene data that includes position data of each of a plurality of workpieces and indicates the plurality of workpieces in a randomly stacked state. The imaginary recognition portion 112a is configured to recognize each of the plurality of workpieces indicated in the randomly stacked state using a recognition program including at least one parameter set to adjust recognition of the plurality of workpieces. The recognition evaluation portion 112a is configured to compare the position data of each of the plurality of workpieces with a result of recognition of each of the plurality of workpieces recognized by the imaginary recognition portion 112a so as to evaluate recognition performance of the recognition program. The result display portion 112b is configured to cause a display of a result of evaluation of the recognition performance of the recognition program evaluated by the recognition evaluation portion 112a.

In the recognition program evaluation device according to the one aspect of the present invention, as described above, the imaginary data acquisition portion generates or acquires imaginary scene data indicating a plurality of workpieces in a randomly stacked state, and the imaginary recognition portion recognizes the plurality of workpieces in the imaginary scene data. The recognition evaluation portion compares the position data of each of the plurality of workpieces with the result of recognition of each of the plurality of workpieces recognized by the imaginary recognition portion so as to evaluate the recognition performance of the recognition program. This ensures that accurate positions and postures of the plurality of workpieces in the imaginary scene data acquired from the position data of each of the plurality of workpieces are automatically compared with the result of recognition by the imaginary recognition portion. This, in turn, reduces burden to the user in evaluating the recognition program to recognize workpieces, as compared with the case of the user having to make a visual comparison between the workpieces actually stacked in a random manner and the result of recognition in an attempt to evaluate the recognition performance of the recognition program.

According to another aspect of the present invention, a method for evaluating a recognition program includes generating or acquiring imaginary scene data that includes position data of each of a plurality of workpieces and indicates the plurality of workpieces in a randomly stacked state. Each of the plurality of workpieces in the imaginary scene data is recognized using a recognition program including a parameter set to adjust recognition of the plurality of workpieces. The position data of each of the plurality of workpieces is compared with a result of recognition of each of the plurality of workpieces so as to evaluate recognition performance of the recognition program. A result of evaluation of the recognition performance of the recognition program is displayed.

In the method for evaluating a recognition program according to the other aspect of the present invention, as described above, imaginary scene data indicating a plurality of workpieces in a randomly stacked state is generated or acquired in the imaginary scene data generating or acquiring step, and then the plurality of workpieces in the imaginary scene data are recognized. In the step of evaluating the recognition performance of the recognition program, the position data of each of the plurality of workpieces is compared the result of recognition of each of the plurality of workpieces, so as to evaluate the recognition performance of the recognition program. This ensures that accurate positions and postures of the plurality of workpieces in the imaginary scene data acquired from the position data of each of the plurality of workpieces are automatically compared with the result of recognition. This, in turn, provides such a method for evaluating a recognition program that reduces burden to the user in evaluating the recognition program to recognize workpieces, as compared with the case of the user having to make a visual comparison between the workpieces actually stacked in a random manner and the result of recognition in an attempt to evaluate the recognition performance of the recognition program.

The above-described configurations inhibit increase in burden to the user in evaluating the recognition program to recognize workpieces.

### BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings, wherein:
FIG. 1 is a block diagram illustrating a configuration of a robot system according to a first embodiment;
FIG. 2 is a perspective view of the robot system according to the first embodiment;
FIG. 3 is a perspective view of a workpiece according to the first embodiment;
FIG. 4 illustrates workpieces in a randomly stacked state according to the first embodiment;
FIG. 5 illustrates parameters of a recognition program according to the first embodiment;
FIG. 6 illustrates a first exemplary result displayed by a PC according to the first embodiment;
FIG. 7 illustrates a second exemplary result displayed by the PC according to the first embodiment;
FIG. 8 illustrates a third exemplary result displayed by the PC according to the first embodiment;
FIG. 9 illustrates interference among the results displayed by the PC according to the first embodiment;
FIG. 10 is a flowchart illustrating recognition program evaluation processing by a control portion of the PC according to the first embodiment;
FIG. 11 illustrates an exemplary result displayed by a PC according to a second embodiment; and
FIG. 12 is a flowchart illustrating parameter estimation processing by a control portion of the PC according to the second embodiment.

### DESCRIPTION OF THE EMBODIMENTS

The embodiments will now be described with reference to the accompanying drawings, wherein like reference numerals designate corresponding or identical elements throughout the various drawings.

### (First embodiment)

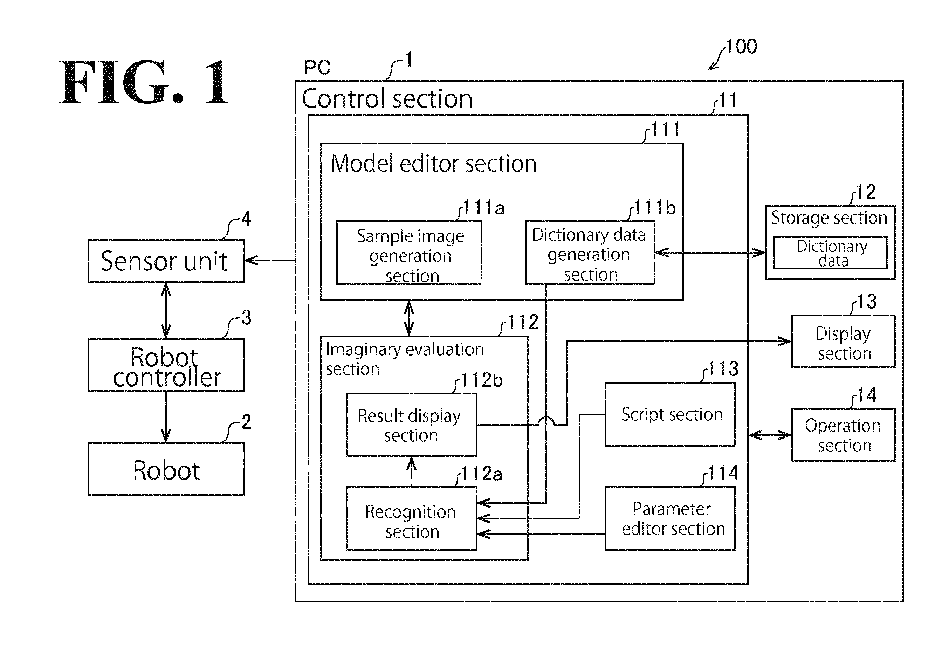

By referring to FIGs. 1 to 9, a configuration of a robot system 100 according to the first embodiment will be described.

As shown in FIG. 1, the robot system 100 includes a PC (personal computer) 1, a robot 2, a robot controller 3, and a sensor unit 4. The PC 1 includes a control portion 11, a storage portion 12, a display portion 13, and an operation portion 14. From the viewpoint of hardware, the control portion 11 is made up of a CPU and other elements. The functional (software) configuration of the control portion 11 includes a model editor portion 111, an imaginary evaluation portion 112, a script portion 113, and a parameter editor portion 114. The model editor portion 111 includes a sample image generation portion 111a and a dictionary data generation portion 111b. The imaginary evaluation portion 112 includes a recognition portion 112a and a result display portion 112b. The PC 1 is an example of the "recognition program evaluation device", and the model editor portion 111 is an example of the "imaginary data acquisition portion". The recognition portion 112a is an example of the "imaginary recognition portion" and the "recognition evaluation portion".

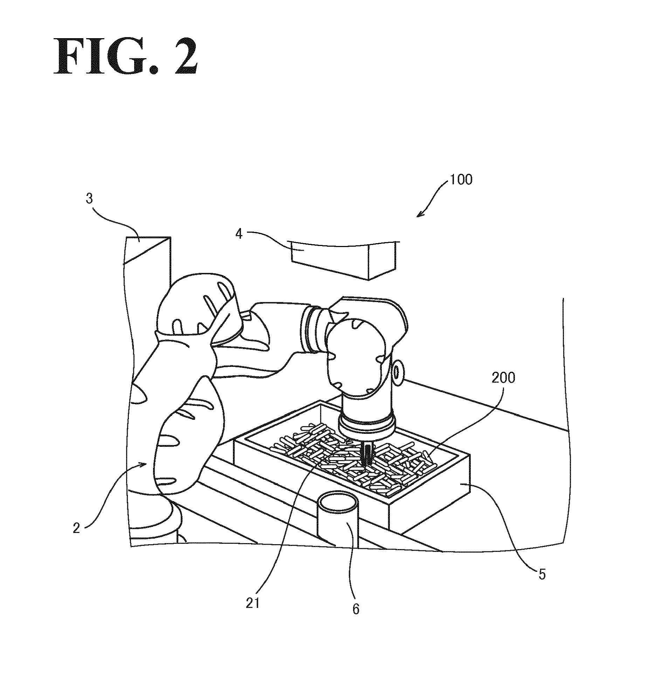

For the robot 2 to grip randomly stacked workpieces 200 (see FIG. 2), the PC 1 is provided to evaluate the recognition performance of a recognition program to recognize the workpieces 200. Specifically, the sensor unit 4 executes the recognition program to recognize the workpieces 200 so as to recognize the positions and postures of the randomly stacked workpieces 200.

As shown in FIG. 2, the robot 2 includes a hand 21 mounted to the distal end of the robot 2. The hand 21 grips the plurality of workpieces 200, one at a time, which are randomly stacked in a stocker 5, and moves the workpiece 200 in a transfer pallet 6. Based on a result of recognition of each of the workpieces 200 recognized by the recognition program executed by the sensor unit 4, the robot 2 performs an arithmetic operation to obtain the position of the grip operation of the robot 2, and transmits the obtained position to the robot controller 3. The robot controller 3 generates an operation command for the robot 2 based on operation information (teaching data) of the robot 2 stored in advance and based on position information of the grip operation that is based on the result of recognition of each of the workpieces 200. The robot controller 3 then controls the robot 2 to move and grip one of the workpieces 200.

The sensor unit 4 uses a measurement unit (not shown) including a camera to pick up an image of the plurality of workpieces 200 randomly stacked in the stocker 5, and acquires a three-dimensional image (distance image) that includes pixels of the picked up image and distance information corresponding to the pixels. Based on the acquired distance image, the sensor unit 4 recognizes three-dimensional positions and postures of the workpieces 200 using a recognition program. The recognition program includes scripts (commands) indicating functions to perform image processing and blob analysis, among other processings. The plurality of scripts are arranged with parameters that are set as conditions under which the scripts are executed. Thus, adjustments are made for a recognition program (algorithm) suitable for the shapes of the workpieces 200. That is, depending on conditions such as the shapes of the workpieces 200, the recognition program needs adjustment of the order of the scripts and adjustment of the parameters so as to accurately recognize the workpieces 200.

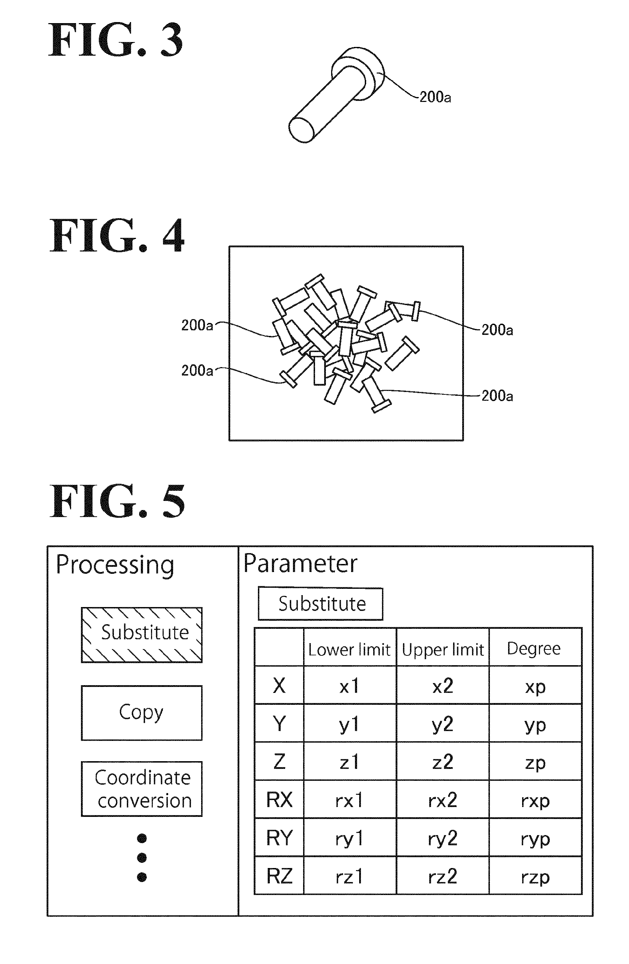

Here, in the first embodiment, the model editor portion 111 (the control portion 11) generates imaginary scene data that includes position data of each of the plurality of workpieces 200 and indicates the plurality of workpieces 200 in a randomly stacked state. Specifically, the model editor portion 111 uses three-dimensional data of one workpiece 200a (see FIG. 3) to generate imaginary scene data indicating a plurality of workpieces 200a in a randomly stacked state shown in FIG. 4.

More specifically, the model editor portion 111 (the control portion 11) has its sample image generation portion 111a read three-dimensional CAD data (sample image) of the one workpiece 200a, and builds a random stack of a plural of the one workpiece 200a, thereby generating the imaginary scene data. In this respect, the model editor portion 111 has its dictionary data generation portion 111b acquire the position and posture of each of the plurality of randomly stacked workpieces 200a as position data of each of the plurality of workpieces 200a. Specifically, the dictionary data generation portion 111b acquires three-dimensional coordinates (X coordinate, Y coordinate, and Z coordinate) of each of the workpieces 200a, and acquires three-dimensional postures (rotational elements RX, RY, and RZ) of each of the workpieces 200a. Also the dictionary data generation portion 111b has the storage portion 12 store the position data of each of the plurality of workpieces 200a as dictionary data.

The model editor portion 111 (the control portion 11) also generates a plurality of pieces of imaginary scene data. That is, the model editor portion 111 generates various patterns of imaginary scene data.

Also in the first embodiment, the imaginary evaluation portion 112 (the control portion 11) recognizes the workpieces 200a in the imaginary scene data using a recognition program to recognize the workpieces 200a, and evaluates the result of recognition of each of the workpieces 200a. Specifically, the recognition portion 112a of the imaginary evaluation portion 112 uses a recognition program that includes parameters (see FIG. 5) set to adjust recognition of the workpieces 200a, so as to recognize each of the workpieces 200a in the imaginary scene data.

Also the recognition portion 112a (the control portion 11) compares the position data (dictionary data) of each of the workpieces 200a with the result of recognition of each of the workpieces 200a so as to evaluate the recognition performance of the recognition program. Specifically, the recognition portion 112a uses a recognition program in which a parameter has been set by a user to recognize each individual workpiece 200a in the plurality of pieces of imaginary scene data (see FIG. 4). Also the recognition portion 112a compares the position data of each of the workpieces 200a with the result of recognition of each of the workpieces 200a in the plurality of pieces of imaginary scene data so as to evaluate the recognition performance of the recognition program. The recognition portion 112a also obtains evaluation values that are to be used to evaluate the recognition performance of the recognition program.

For example, the recognition portion 112a (the control portion 11) obtains a success ratio or a reproductivity ratio, among other exemplary evaluation values. The success ratio is represented by the equation: success ratio (%) = (the number of successfully detected workpieces 200a among the total of the workpieces 200a detected from all the pieces of scene data) / (the total of the workpieces 200a detected from all the pieces of scene data) x 100. That is, the success ratio implies certainty and reliability of the result of detection of the workpieces 200a. Thus, the success ratio is effective when used as an evaluation indicator in production lines where certainty and reliability of the result of detection of the workpieces 200a are critical.

The reproductivity ratio is represented by the equation: reproductivity ratio (%) = (the number of successfully detected workpieces 200a) / (the number of workpieces 200a targeted for recognition in all the pieces of scene data) x 100. That is, the reproductivity ratio implies the degree of detectability, indicating how many workpieces 200a existing in the scene data are detected. Thus, the reproductivity ratio is effective when used as an evaluation indicator in cases where as many workpieces 200a as possible are desired to be detected by one scanning (imaging) (that is, the number of scannings is to be decreased for the purpose of shortening the tact time), and where as many candidates as possible are desired to be detected in main processing, followed by post-processing where a selection is made among the candidates.

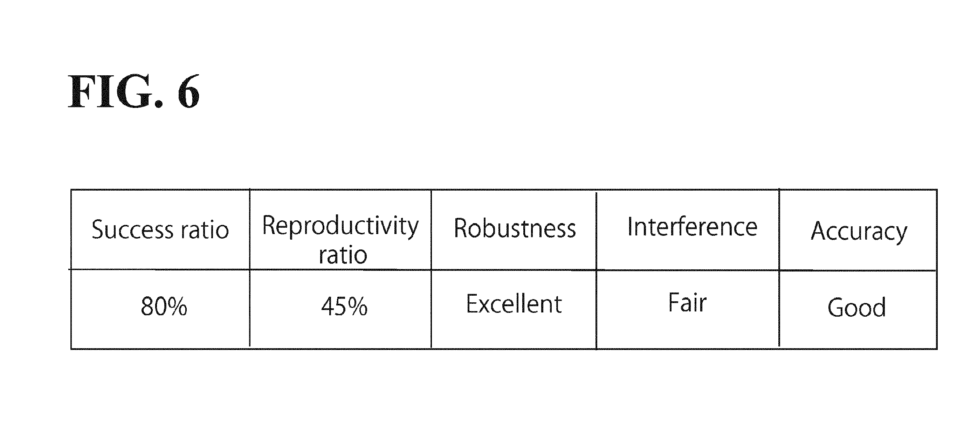

Also the recognition portion 112a (the control portion 11) uses a plurality of different evaluation standards to evaluate the recognition performance of the recognition program. For example, as shown in FIG. 6, the recognition portion 112a uses the evaluation standards: success ratio, reproductivity ratio, robustness, interference, and accuracy, so as to evaluate the recognition performance of the recognition program.

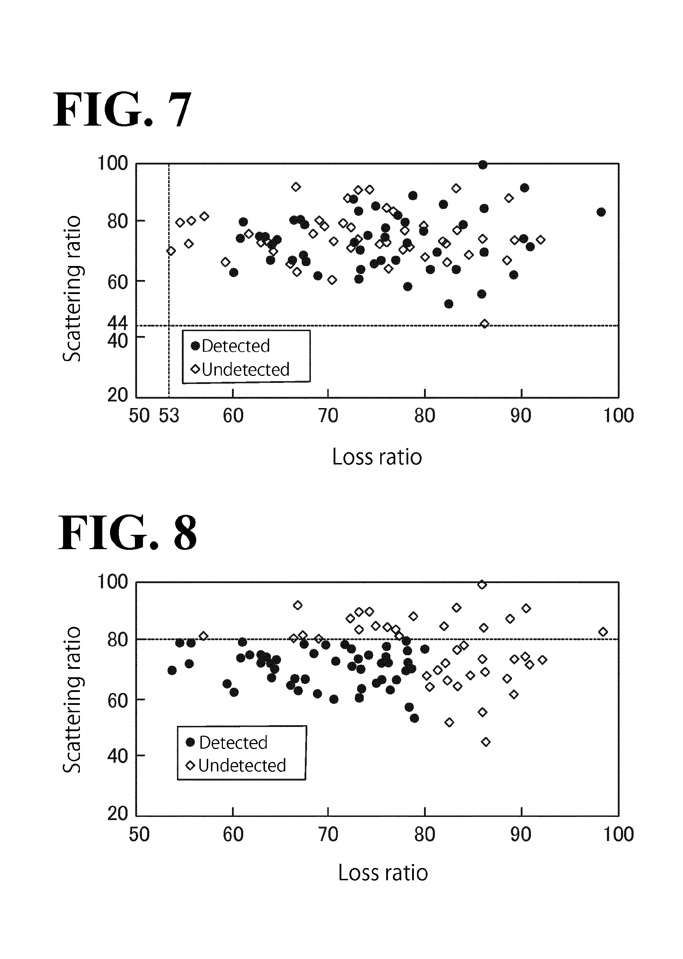

As shown in FIGs. 7 and 8, robustness is used to evaluate, based on scattering ratio and loss ratio, recognition suitability of scene data of a random stack that has a loss (hiding) because of contamination by a foreign substance, overlapping of the workpieces 200a, and changes in posture. Also robustness is used to evaluate basic performance of the recognition processing. The scattering ratio is represented by: scattering ratio (%) = 100 - (the number of a certain group of workpieces 200a in the scene data) / (the number of all the workpieces 200a measured in the scene data) x 100. The loss ratio is represented by: loss ratio (%) = 100 - (the surface area of a workpiece 200a in the scene data) / (the surface area of a three-dimensional model of the workpiece 200a) x 100.

In the example shown in FIG. 7, even some of the workpieces 200a with a loss ratio of as low as approximately 53% and some of the workpieces 200a with a scattering ratio of as low as approximately 44% are included in the undetected workpieces 200a. In this case, robustness is not satisfactory, which indicates a possibility of unstable recognition performance. Thus, robustness is not good. In the example shown in FIG. 8, all of the workpieces 200a with a loss ratio of equal to or less than 80% and a scattering ratio of equal to or less than 80% are detected. This case indicates that if the random stack has little contamination by a foreign substance (that is, has a low scattering ratio) and has little data loss (that is, has a low loss ratio), the workpieces 200a are reliably recognized and robustness is satisfactory.

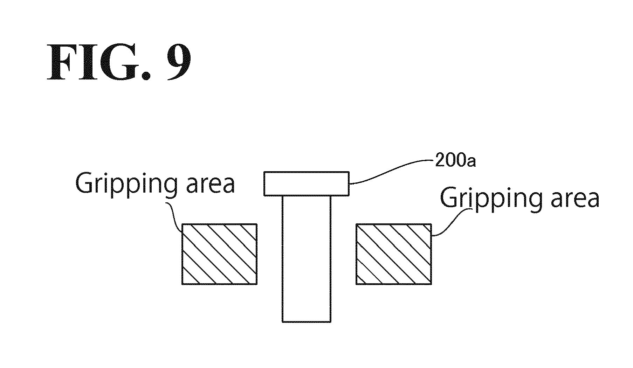

Interference is used to evaluate whether the detected workpieces 200a are actually grippable by the robot 2. Specifically, an interference ratio is represented by: interference ratio (%) = (the number of interference areas) / (the number of gripping areas) x 100. When the detected workpieces 200a are lowest in their average or maximum interference ratio, the detected workpieces 200a are evaluated as being easy to grip. The number of gripping areas indicates the number of gripping areas (see FIG. 9) associated with the workpieces 200a to be gripped by the robot 2. The number of interference areas indicates the number of positions where the robot 2 in a gripping area is interfered with by, for example, another workpiece 200a existing above the robot 2's gripping position. The gripping areas are included in the position data of each of the workpieces 200a.

Accuracy indicates an error (difference and variation) between: the position (Xd, Yd, Zd) and posture (RXd, RYd, RZd) in the result of recognition of each of the workpieces 200a; and the position (Xc, Yc, Zc) and posture (RXc, RYc, RZc) of the position data of each of the workpieces 200a (correct data) in the dictionary data. The error is used to evaluate accuracy. That is, accuracy is an evaluation standard by which to evaluate whether the position and posture of the workpiece 200a are recognized more accurately. Thus, accuracy is effective when used as an evaluation indicator in cases where a more accurate grip is critical, such as in an assembly step.

The result display portion 112b (the control portion 11) has the display portion 13 display a result of evaluation of the recognition performance of the recognition program evaluated by the recognition portion 112a. For example, as shown in FIG. 6, the result display portion 112b has the display portion 13 display the result of evaluation in terms of success ratio, reproductivity ratio, robustness, interference, and accuracy. In this case, the result display portion 112b expresses the success ratio and the reproductivity ratio in percentage terms. To describe robustness, interference, and accuracy, the result display portion 112b uses "Excellent", "Good", and "Fair". As shown in FIGs. 7 and 8, the result display portion 112b also has the display portion 13 display graphs of the scattering ratio versus the loss ratio for detected workpieces 200a and undetected workpieces 200a.

The script portion 113 (the control portion 11) sets the scripts (processings) (see FIG. 5) of the recognition program in accordance with the user's operation of an operation portion 14. The parameter editor portion 114 (the control portion 11) sets the parameters (see FIG. 5) of each of the scripts (processings) of the recognition program in accordance with the user's operation of the operation portion 14.

As shown in FIG. 2, the robot 2 is a vertically articulated robot with six degrees of freedom. The robot controller 3 controls overall operation of the robot 2.

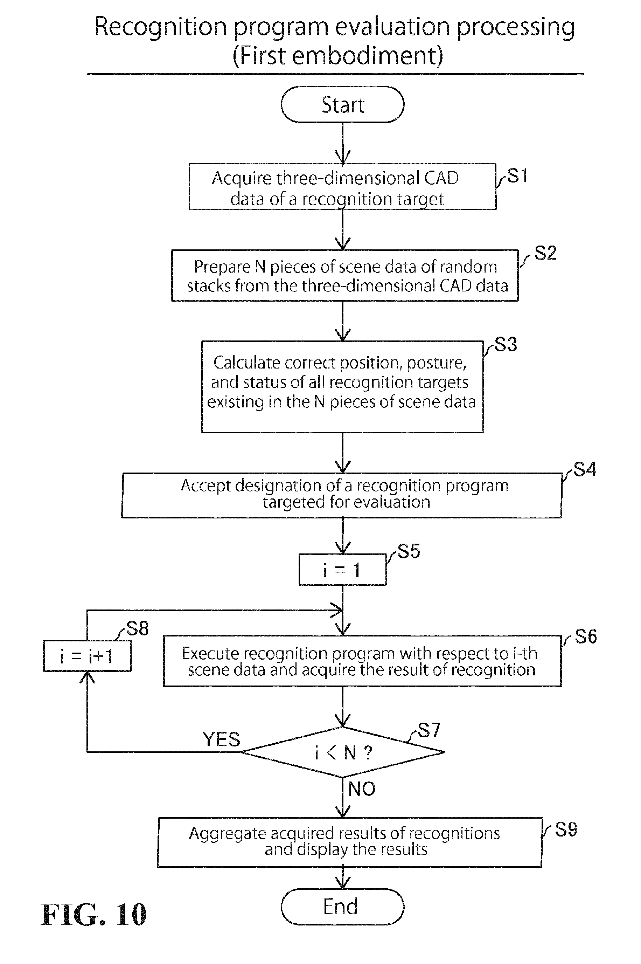

Next, by referring to FIG. 10, recognition program evaluation processing performed by the control portion 11 of the PC 1 will be described.

When three-dimensional CAD data of a workpiece 200a targeted for recognition is input by the user's operation, then at step S 1 the control portion 11 reads and acquires the three-dimensional CAD data of the single workpiece 200a targeted for recognition (see FIG. 3). At step S2, from the three-dimensional CAD data of the workpiece 200a, the control portion 11 prepares N pieces of scene data (see FIG. 4) of random stacks.

At step S3, the control portion 11 calculates the position data (correct position and posture) and status (scattering ratio and loss ratio) of all workpieces 200a targeted for recognition existing in the prepared N pieces of scene data. The control portion 11 also has the storage portion 12 store the calculated position data and status as dictionary data.

At step S4, the control portion 11 accepts designation of the recognition program targeted for evaluation. Specifically, the control portion 11 accepts, by the user's operation, setting of the scripts (processings) of the recognition program and the parameters of the scripts. At step S5, the control portion 11 sets i at i = 1. At step S6, the control portion 11 executes the recognition program with respect to i-th scene data to recognize the workpieces 200a and acquire the result of recognition.

At step S7, the control portion 11 determines whether i is smaller than N. That is, the control portion 11 determines whether the recognition program has been executed with respect to all of the N pieces of scene data. When i < N (that is, when the recognition program has not been executed with respect to all of the N pieces of scene data), then at step S8 the control portion 11 sets i at i = i + 1 and returns to step S6. When i = N (that is, when the recognition program has been executed with respect to all of the N pieces of scene data), then at step S9 the control portion 11 aggregates (evaluates) the acquired results of recognitions and displays the results on the display portion 13 (see FIGs. 6 to 8). Then, the recognition program evaluation processing ends.

In the first embodiment, as described above, the recognition portion 112a recognizes each of a plurality of workpieces 200a in the imaginary scene data that is generated by the model editor portion 111 and that indicates the plurality of workpieces 200a in a randomly stacked state. The recognition portion 112a also compares the position data of each of the workpieces 200a with the result of recognition of each of the workpieces 200a so as to evaluate the recognition performance of the recognition program. This ensures that accurate positions and postures of the plurality of workpieces 200a in the imaginary scene data acquired from the position data of each of the plurality of workpieces 200a are automatically compared with the result of recognition by the recognition portion 112a. This, in turn, reduces burden to the user in evaluating the recognition program to recognize workpieces 200a, as compared with the case of the user having to make a visual comparison between the workpieces 200a actually stacked in a random manner and the result of recognition in an attempt to evaluate the recognition performance of the recognition program. The imaginary scene data is generated without using actual workpieces 200. This ensures evaluation of the recognition program without using actual machines (such as the robot 2, the robot controller 3, and the sensor unit 4), but only by a simulation using the PC 1 alone. This, in turn, ensures adjustment of the recognition program in advance on the PC 1, and shortens the time to adjust the recognition program using the actual machines (the robot 2, the robot controller 3, and the sensor unit 4).

Also in the first embodiment, as described above, the recognition portion 112a (the control portion 11) obtains evaluation values (success ratio and reproductivity ratio) to be used to evaluate the recognition performance of the recognition program, and the result display portion 112b (the control portion 11) displays the evaluation values (success ratio and reproductivity ratio). This ensures that the user is notified of the recognition performance of the recognition program in the form of the evaluation values (success ratio and reproductivity ratio). This facilitates the user's adjustment of the parameters of the recognition program based on the evaluation values.

Also in the first embodiment, as described above, the recognition portion 112a (the control portion 11) evaluates the recognition performance of the recognition program using a plurality of different evaluation standards. The result display portion 112b (the control portion 11) displays results of evaluations that have used the plurality of different evaluation standards. This ensures adjustment of the parameters of the recognition program based on results of evaluations that have used evaluation standards corresponding to different applications of recognition of the workpieces 200a (applications of the robot system 100).

Also in the first embodiment, as described above, the model editor portion 111 (the control portion 11) generates imaginary scene data indicating a plurality of workpieces 200a in a randomly stacked state using three-dimensional data of one workpiece 200a. This facilitates generation of imaginary scene data in accordance with how many pieces of the to-be-recognized workpiece 200a are to be randomly stacked, in accordance with the shape of the to-be-recognized workpiece 200a, or in accordance with other features of the to-be-recognized workpiece 200a. This, in turn, ensures accurate evaluation of the recognition program.

Also in the first embodiment, as described above, the model editor portion 111 (the control portion 11) generates a plurality of pieces of imaginary scene data. The recognition portion 112a (the control portion 11) recognizes the workpieces 200a in the plurality of pieces of imaginary scene data using a recognition program, and compares the position data of each of the workpieces 200a with results of recognitions of the workpieces 200a in the plurality of pieces of imaginary scene data so as to evaluate the recognition performance of the recognition program. This ensures use of various patterns of imaginary scene data of randomly stacked workpieces 200a to evaluate the recognition program. This, in turn, increases the accuracy of evaluation of the recognition program.

### (Second embodiment)

Next, by referring to FIGs. 5, 11, and 12, a configuration of a robot system 100 according to the second embodiment will be described. In the second embodiment described below, the recognition program is evaluated while the parameters of the recognition program are changed, as opposed to the first embodiment, where the recognition program is evaluated without changes of the parameters of the recognition program.

Here, in the second embodiment, the recognition portion 112a (the control portion 11) recognizes each of the workpieces 200a in the imaginary scene data while changing the parameters of the recognition program. Specifically, as shown in FIG. 5, the recognition portion 112a recognizes each of the workpieces 200a in the imaginary scene data while changing a parameter of the recognition program between a lower limit and an upper limit set by the user. For example, in the example shown in FIG. 5, "Substitute" processing (script) has parameters (X, Y, Z, RX, RY, RZ), and one of these parameters is changed by degrees graded between the lower limit and the upper limit of the parameter. In this manner, each workpiece 200a is recognized by the recognition program.

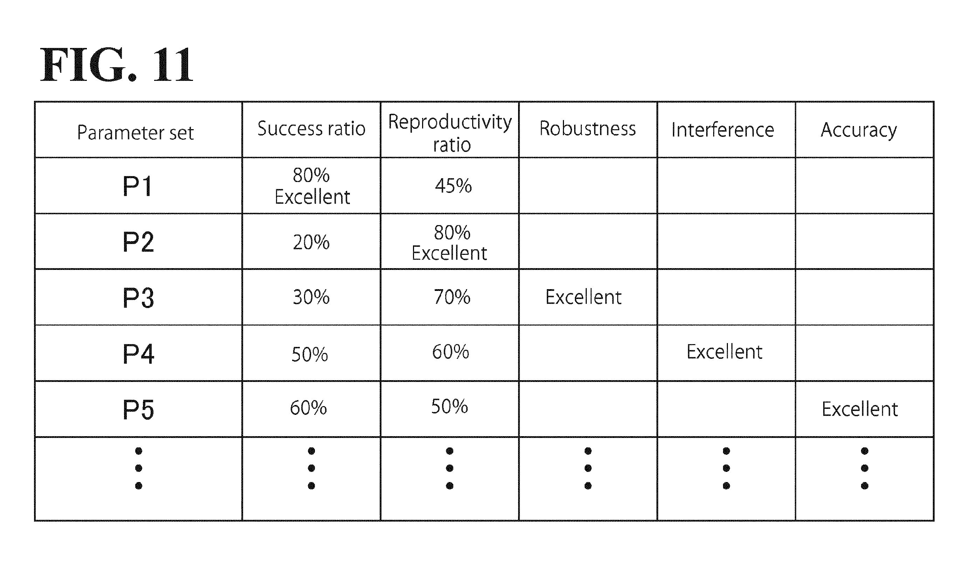

The recognition portion 112a (the control portion 11) also recognizes each of the workpieces 200a in the imaginary scene data recognition program while changing the plurality of parameters (for example, X, Y, Z, RX, RY, RZ). That is, by changing the parameters of the recognition program, the recognition portion 112a estimates a combination of parameters that could realize higher recognition performance. The recognition portion 112a also compares the position data of each of the workpieces 200a with the result of recognition of each of the workpieces 200a so as to evaluate the recognition performance of the recognition program for each of the parameters (see FIG. 11).

As shown in FIG. 11, the result display portion 112b (the control portion 11) has the display portion 13 display the results of evaluations of the recognition performance of the recognition program for every combination (parameter sets P1, P2, ...) of the plurality of changed parameters. Also the result display portion 112b uses "Excellent" to indicate those parameter sets, among the plurality of parameter sets, that show excellence (for example, highest recognition performance) in the evaluation standards (success ratio, reproductivity ratio, robustness, interference, and accuracy).

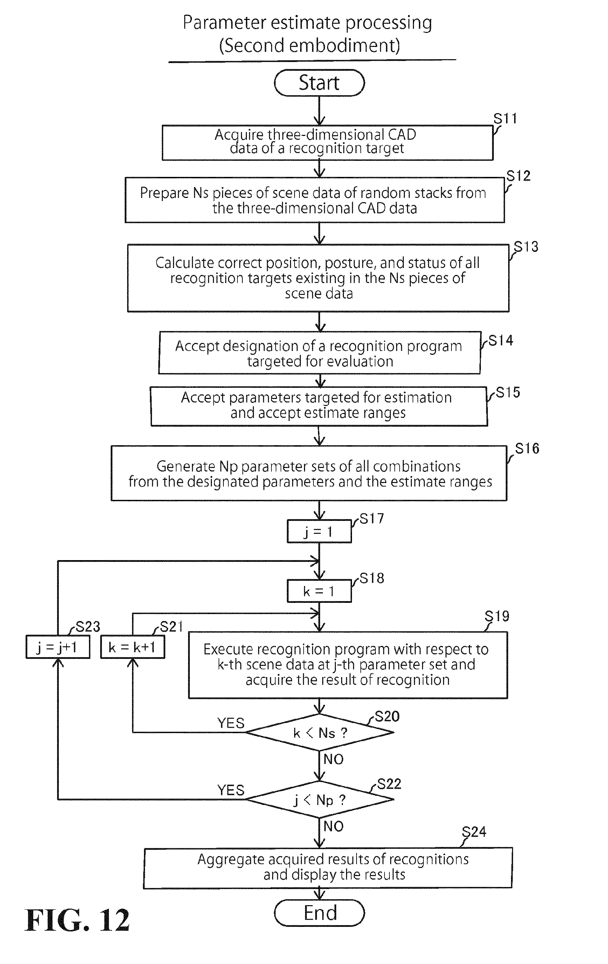

Next, by referring to FIG. 12, parameter estimate processing performed by the control portion 11 of the PC 1 will be described.

When three-dimensional CAD data of a workpiece 200a targeted for recognition is input by the user's operation, then at step S11, the control portion 11 reads and acquires the three-dimensional CAD data of the single workpiece 200a targeted for recognition. At step S12, from the three-dimensional CAD data of the workpieces 200a, the control portion 11 prepares Ns pieces of scene data of random stacks.

At step S13, the control portion 11 calculates the position data (correct position and posture) and status (scattering ratio and loss ratio) of all workpieces 200a targeted for recognition existing in the prepared Ns pieces of scene data. The control portion 11 also has the storage portion 12 store the calculated position data and status as dictionary data.

At step S14, the control portion 11 accepts designation of the recognition program targeted for evaluation. Specifically, the control portion 11 accepts, by the user's operation, setting of the scripts (processings) of the recognition program and the parameters of the scripts. At step S15, the control portion 11 accepts, by the user's operation, designation (selection) of parameters of the recognition program targeted for estimation and setting of estimate ranges (upper limit, lower limit, and graded degrees).

At step S16, from the designated parameters and the estimate ranges, the control portion 11 generates combinations (parameter sets P1 to PNp) of all (Np) parameters. At step S 17, the control portion 11 sets j at j = 1, and at step S 18, sets k at k = 1. At step S 19, the control portion 11 executes the recognition program with respect to k-th scene data at j-th parameter set Pj to recognize the workpieces 200a and acquire the result of recognition.

At step S20, the control portion 11 determines whether k is smaller than Ns. That is, the control portion 11 determines whether the recognition program has been executed with respect to all of the Ns pieces of scene data. When k < Ns (that is, when the recognition program has not been executed with respect to all of the Ns pieces of scene data), then at step S21, the control portion 11 sets k at k = k + 1 and returns to step S 19. When k = Ns (that is, when the recognition program has been executed with respect to all of the Ns pieces of scene data), then the control portion 11 proceeds to step S22.

At step S22, the control portion 11 determines whether j is smaller than Np. That is, the control portion 11 determines whether the recognition program has been executed with respect to all of the combinations (parameter sets) of the Np parameters. When j < Np (that is, when the recognition program has not been executed with respect to all of the Np parameter sets), then at step S23, the control portion 11 sets j at j = j + 1 and returns to step S 18. When j = Np (that is, when the recognition program has been executed with respect to all of the Np parameter sets), then at step S24, the control portion 11 aggregates (evaluates) the acquired results of recognitions and displays the results on the display portion 13 (see FIG. 11). Then, the recognition program evaluation processing ends.

The second embodiment is otherwise similar to the first embodiment.

In the second embodiment, as described above, the recognition portion 112a (the control portion 11) recognizes each of the workpieces 200a in the imaginary scene data while changing the parameters of the recognition program. Also the recognition portion 112a (the control portion 11) compares the position data of each of the workpieces 200a with the result of recognition of each of the workpieces 200a so as to evaluate the recognition performance of the recognition program for each of the parameters. Thus, the recognition portion 112a changes the parameters of the recognition program so that the recognition program is evaluated for each of the parameters. This reduces burden to the user as compared with the case of the user having to manually change the parameters.

Also in the second embodiment, as described above, the recognition portion 112a (the control portion 11) recognizes each of the workpieces 200a in the imaginary scene data while changing a parameter of the recognition program between a lower limit and an upper limit set by the user. Thus, when each of the workpieces 200a in the imaginary scene data is to be recognized for each parameter so as to evaluate the recognition program, the parameter is changed between its lower limit and upper limit set by the user, in evaluation of the recognition program. This shortens the time for processing as compared with changing the parameter over its entire range.

Also in the second embodiment, as described above, the recognition portion 112a (the control portion 11) recognizes each of the workpieces 200a in the imaginary scene data while changing a plurality of parameters of the recognition program. The result display portion 112b (the control portion 11) displays the result of evaluation of the recognition performance of the recognition program for every combination of the plurality of changed parameters. Thus, the user is notified of the result of evaluation of the recognition program for every combination of the parameters. This ensures that based on the results of evaluations of the combinations of the parameters, the user selects a combination of the parameters of the recognition program. This, in turn, facilitates adjustment of the recognition program.

The advantageous effects of the second embodiment are otherwise similar to the advantageous effects the first embodiment.

Obviously, numerous modifications and error of the present disclosure are possible in light of the above teachings. It is therefore to be understood that within the scope of the appended claims, the present disclosure may be practiced otherwise than as specifically described herein.

For example, in the first and second embodiments, the PC (recognition program evaluation device) has been illustrated as generating imaginary scene data that indicates workpieces in a randomly stacked state from data of a single workpiece. The PC may otherwise acquire previously generated imaginary scene data that indicates workpieces in a randomly stacked state.

Also in the first and second embodiments, the robot arm of the robot has been illustrated as having six degrees of freedom. The robot arm may otherwise have other than six degrees of freedom (such as five degrees of freedom and seven degrees of freedom).

Also in the first and second embodiments, the PC (recognition program evaluation device) has been illustrated as evaluating the recognition program to recognize the positions of randomly stacked workpieces so that the robot grips the randomly stacked workpieces. It is also possible to evaluate other recognition programs than the recognition program associated with the robot's gripping of the workpieces. For example, it is possible to evaluate a recognition program to recognize the state of the workpieces after being subjected to work.

Also in the first and second embodiments, a plurality of evaluation standards are used in the evaluation. It is also possible to use, for example, a single evaluation standard. It is also possible to use in the evaluation other evaluation standards than success ratio, reproductivity ratio, robustness, interference, and accuracy.

Also in the first and second embodiments, for the sake of description, the processing by the control portion has been illustrated as using a flow-driven flow, in which the processing is executed in an order of processing flow. The processing operation of the control portion may otherwise be, for example, event-driven processing, which is executed on an event basis. In this case, the processing may be complete event-driven processing or may be a combination of the event-driven processing and the flow-driven processing.
- 1: PC (recognition program evaluation device)
- 111: Model editor portion (imaginary data acquisition portion)
- 112a: Recognition portion (imaginary recognition portion, recognition evaluation portion)
- 112b: Result display portion
- 200,200a: Workpiece

## Claims

1. A recognition program evaluation device (1), **characterized by**:
an imaginary data acquisition portion (111) configured to generate or acquire imaginary scene data that comprises position data of each of a plurality of workpieces and indicates the plurality of workpieces in a randomly stacked state;
an imaginary recognition portion (112a) configured to recognize each of the plurality of workpieces indicated in the randomly stacked state using a recognition program comprising at least one parameter set to adjust recognition of the plurality of workpieces;
a recognition evaluation portion (112a) configured to compare the position data of each of the plurality of workpieces with a result of recognition of each of the plurality of workpieces recognized by the imaginary recognition portion (112a) so as to evaluate recognition performance of the recognition program; and
a result display portion (112b) configured to cause a display of a result of evaluation of the recognition performance of the recognition program evaluated by the recognition evaluation portion (112a).

2. The recognition program evaluation device (1) according to claim 1,
wherein the recognition evaluation portion (112a) is configured to obtain an evaluation value that is to be used to evaluate the recognition performance of the recognition program, and
wherein the result display portion (112b) is configured to cause a display of the evaluation value.

3. The recognition program evaluation device (1) according to claim 1 or 2,
wherein the recognition evaluation portion (112a) is configured to evaluate the recognition performance of the recognition program using a plurality of different evaluation standards, and
wherein the result display portion (112b) is configured to cause a display of results of evaluations of the recognition performance of the recognition program evaluated using the plurality of different evaluation standards.

4. The recognition program evaluation device (1) according to any one of claims 1 to 3,
wherein the imaginary recognition portion (112a) is configured to recognize each of the plurality of workpieces in the imaginary scene data while changing the at least one parameter, and
wherein the recognition evaluation portion (112a) is configured to compare the position data of each of the plurality of workpieces with the result of recognition of each of the plurality of workpieces recognized by the imaginary recognition portion (112a) so as to evaluate the recognition performance of the recognition program for each of the at least one parameter.

5. The recognition program evaluation device (1) according to claim 4, wherein the at least one parameter comprises a lower limit and an upper limit set by the user, and the imaginary recognition portion (112a) is configured to recognize each of the plurality of workpieces in the imaginary scene data while changing the at least one parameter between the lower limit and the upper limit.

6. The recognition program evaluation device (1) according to claim 4 or 5,
wherein the at least one parameter of the recognition program comprises a plurality of parameters, and the imaginary recognition portion (112a) is configured to recognize each of the plurality of workpieces in the imaginary scene data while changing the plurality of parameters, and
wherein the result display portion (112b) is configured to cause a display of the result of evaluation of the recognition performance of the recognition program for every combination of the plurality of changed parameters.

7. The recognition program evaluation device (1) according to any one of claims 1 to 6, wherein the imaginary data acquisition portion (111) is configured to generate the imaginary scene data indicating the plurality of workpieces in the randomly stacked state using three-dimensional data of one workpiece among the plurality of workpieces.

8. The recognition program evaluation device (1) according to any one of claims 1 to 7, wherein the imaginary data acquisition portion (111) is configured to generate or acquire a plurality of pieces of the imaginary scene data,
wherein the imaginary recognition portion (112a) is configured to recognize each of the plurality of workpieces in the plurality of pieces of imaginary scene data using the recognition program, and
wherein the recognition evaluation portion (112a) is configured to compare the position data of each of the plurality of workpieces with a result of recognition of each of the plurality of workpieces in the plurality of pieces of imaginary scene data recognized by the imaginary recognition portion (112a) so as to evaluate the recognition performance of the recognition program.

9. A method for evaluating a recognition program, **characterized by**:
generating or acquiring imaginary scene data that comprises position data of each of a plurality of workpieces and indicates the plurality of workpieces in a randomly stacked state;
recognizing each of the plurality of workpieces in the imaginary scene data using a recognition program comprising a parameter set to adjust recognition of the plurality of workpieces;
comparing the position data of each of the plurality of workpieces with a result of recognition of each of the plurality of workpieces so as to evaluate recognition performance of the recognition program; and
displaying a result of evaluation of the recognition performance of the recognition program.
